# DEMANDE DE BREVET EUROPEEN

(11) **EP 2 033 548 A1**
(43) Date de publication de la demande: **11.03.2009**
(21) Numéro de dépôt: 08356123.3
(22) Date de dépôt: 01.09.2008
(51) Int. Cl.: A47J 19/02, A47J 43/07

(54) **Appareil électroménager de préparation culinaire comportant un couvercle comprenant une cheminée d'alimentation munie d'un poussoir en deux parties**

(30) Priorité: 10.09.2007 FR 0706324
(71) Demandeur: SEB SA, 69130 Ecully (FR)
(72) Inventeur: Grassin, Stéphane, 53100 Moulay (FR); Landemaine, Evelyne, 53640 Le Ribay (FR); Gerard, Emmanuel, 61410 Couterne (FR)
(74) Mandataire: Kiehl, Hubert

(57) **Abrégé**

Appareil électroménager de préparation culinaire comportant un outil de travail (2) disposé dans un récipient (1) fermé par un couvercle (4) comprenant une cheminée d'alimentation (40) munie d'un poussoir amovible, ledit poussoir comportant un premier élément poussoir (5) comprenant un corps allongé surmonté d'une collerette (51), ledit premier élément poussoir (5) comprenant une extrémité supérieure ouverte comportant une ouverture d'accès à une goulotte dans laquelle vient s'engager un second élément poussoir (6) comportant un corps allongé surmonté d'une tête, **caractérisé en ce que** la cheminée d'alimentation (40) ou la surface inférieure de la tête du second élément poussoir (6) comporte des protubérances formant des butées limitant la profondeur maximale d'introduction du second élément poussoir (6) lorsque ce dernier est introduit seul dans la cheminée d'alimentation (40) et en ce que lesdites protubérances s'engagent dans des encoches de réception portées par le premier élément poussoir (5) lorsque les deux éléments du poussoir (5, 6) sont introduits ensemble dans la cheminée d'alimentation (40).

## Description

La présente invention se rapporte au domaine technique général des appareils électroménager de préparation culinaire comportant un récipient fermé par un couvercle muni d'une cheminée d'alimentation permettant l'introduction d'aliments dans le récipient et se rapporte plus particulièrement à un appareil électroménager de préparation culinaire dans lequel la cheminée est équipée d'un poussoir en deux parties.

Il est connu, du brevet US 6 813 997, une centrifugeuse pour la préparation de jus de fruits ou de légumes comportant une râpe tournante disposée dans un récipient fermé par un couvercle muni d'une cheminée d'alimentation de gros diamètre. Une telle cheminée d'alimentation présente l'avantage de permettre l'introduction de fruits ou de légumes présentant une importante largeur, pour leur traitement par la centrifugeuse. Cependant, une telle cheminée de gros diamètre présente l'inconvénient de rendre plus difficile le traitement des aliments de plus faible largeur, ces derniers n'étant pas correctement guidés par la cheminée et ayant tendance à se mettre de travers. Il est connu de ce document de remédier à ce problème en équipant l'appareil d'un poussoir en deux parties, le poussoir comportant un premier élément poussoir dont le diamètre correspond sensiblement au diamètre de la cheminée du couvercle, le premier élément poussoir comprenant lui-même une goulotte de diamètre restreinte dans laquelle vient coulisser un deuxième élément poussoir de diamètre correspondant.

Ainsi, lorsqu'il est nécessaire de traiter des aliments de plus faibles dimensions, le premier élément poussoir est placé dans la cheminée d'alimentation du couvercle et les aliments sont introduits au travers de la goulotte du premier élément poussoir, en étant poussé vers l'outil de travail au moyen du second élément poussoir. Lors de cette opération, le premier élément poussoir est maintenu verticalement dans la cheminée d'alimentation par une collerette disposée à l'extrémité supérieure du premier poussoir prenant appui en bordure de la cheminée d'alimentation. Le second élément poussoir comporte quant à lui, une tête qui sert de surface d'appui de la main et qui vient buter contre la collerette lorsque le corps du second élément poussoir est entièrement introduit dans le premier élément poussoir.

Avec un tel dispositif, il est nécessaire que la collerette du premier élément poussoir soit suffisamment rigide et solide pour résister aux efforts importants pouvant s'exercer sur cette dernière lorsque l'utilisateur pousse fermement sur le second élément poussoir pour faire passer dans la goulotte du premier élément poussoir des aliments de diamètre légèrement trop important ou un aliment qui s'est coincé dans la goulotte en se mettant de biais.

La collerette doit donc présenter une épaisseur de plusieurs millimètres, notamment lorsque le poussoir est réalisé en matière plastique, pour qu'elle puisse résister aux efforts demandés.

Or, pour réduire la quantité d'aliment non traité par l'outil coupant il est nécessaire que les extrémités inférieures des premier et second poussoirs puissent venir au plus prés de l'outil de travail lorsqu'ils sont intégralement introduits dans la cheminée d'alimentation du couvercle, mais sans toutefois pouvoir venir heurter l'outil de travail pour éviter de détériorer le poussoir et former des copeaux de plastique pouvant se mélanger à la préparation. La longueur du second élément poussoir est donc dimensionnée pour que son extrémité inférieure vienne au plus prés de l'outil de travail lorsque le premier et le second poussoir sont introduits ensemble dans la cheminée.

Cependant, si l'utilisateur se sert du second élément poussoir pour pousser les aliments dans la cheminée du couvercle sans avoir placé au préalable le premier élément poussoir dans la cheminée, il existe alors un risque important que l'extrémité inférieure du second poussoir vienne heurter l'outil de travail étant donné que la tête du second poussoir ne vient plus alors buter contre la collerette du premier poussoir mais directement contre l'extrémité supérieure de la cheminée disposée plus bas.

Aussi, un but de la présente invention est de proposer un appareil de préparation culinaire comportant un poussoir en deux parties remédiant à ces inconvénients. En particulier, un but de la présente invention est de proposer un poussoir en deux parties dans lequel le second élément poussoir puisse venir au plus prés de l'outil de travail lorsqu'il est utilisé en association avec le premier élément poussoir et qui ne puisse pas venir heurter l'outil de travail lorsque l'utilisateur se sert du second élément poussoir seul pour amener les aliments dans la cheminée d'alimentation du couvercle.

A cet effet, l'invention se rapporte à un appareil électroménager de préparation culinaire comportant un outil de travail disposé dans un récipient fermé par un couvercle comprenant une cheminée d'alimentation munie d'un poussoir amovible, le poussoir comportant un premier élément poussoir comprenant un corps allongé surmonté d'une collerette formant une butée limitant la profondeur d'introduction du corps allongé dans la cheminée d'alimentation, le premier élément poussoir comprenant une extrémité supérieure ouverte comportant une ouverture d'accès à une goulotte dans laquelle vient s'engager un second élément poussoir comportant un corps allongé surmonté d'une tête formant une butée limitant la profondeur d'introduction du corps allongé dans la goulotte, les corps allongés des premier et second éléments du poussoir présentant une longueur adaptée pour que leur extrémité inférieure vienne à proximité de l'outil de travail lorsqu'ils sont, ensemble, engagés au maximum dans la cheminée d'alimentation, **caractérisé en ce que** la cheminée d'alimentation ou la surface inférieure de la tête du second élément poussoir comporte des protubérances formant des butées limitant la profondeur maximale d'introduction du second élément poussoir lorsque ce dernier est introduit seul dans la cheminée d'alimentation et en ce que les protubérances s'engagent dans des encoches de réception portées par le premier élément poussoir lorsque les deux éléments du poussoir sont introduits ensemble dans la cheminée d'alimentation.

Selon une autre caractéristique de l'invention, les encoches de réception comportent un fond présentant une épaisseur de matière inférieure à 1 mm.

Selon une autre caractéristique de l'invention, les protubérances sont formées par au moins deux nervures s'étendant sous la tête du second élément poussoir.

Selon une autre caractéristique de l'invention, les protubérances s'étendent radialement à la tête du second élément poussoir.

Selon encore une autre caractéristique de l'invention, les encoches de réception sont formées sur la surface supérieure de la collerette, cette dernière comportant une bordure périphérique qui délimite un espace à l'intérieur duquel les protubérances viennent s'engager lorsque le second élément du poussoir est entièrement introduit dans le premier élément poussoir.

Selon encore une autre caractéristique de l'invention, la collerette du premier élément poussoir présente un contour circulaire, l'ouverture d'accès à la goulotte étant excentrée par rapport au centre de la collerette.

Selon une autre caractéristique de l'invention, le corps allongé du premier élément poussoir comporte une partie présentant une section transversale en U venant dans le prolongement de l'ouverture et formant la goulotte de réception du second élément poussoir.

Selon une autre caractéristique de l'invention, l'extrémité inférieure du premier élément poussoir comporte une paroi de fond s'étendant à l'extérieur de la goulotte et présentant une forme complémentaire de la section de passage de la cheminée d'alimentation du couvercle.

Selon une autre caractéristique de l'invention, le premier élément poussoir comporte une nervure de renfort s'étendant à l'extérieur de la goulotte, entre la paroi de fond et la collerette.

Selon encore une autre caractéristique de l'invention, le corps allongé du second élément comporte une paroi présentant une section transversale en U épousant la section de passage de la goulotte du premier élément poussoir et une extrémité inférieure fermée par une paroi de fond présentant une forme complémentaire à la section de passage de la goulotte.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un récipient d'appareil de préparation culinaire selon un mode particulier de réalisation de l'invention, le poussoir étant représenté en dehors de la cheminée du couvercle,
- les figures 2 et 3 représentent des vues en perspective du poussoir en deux parties équipant l'appareil de la figure 1,
- les figures 4 et 5 sont des vues en coupe longitudinale, suivant un plan passant par le centre de la cheminée du couvercle, représentant respectivement le récipient lorsque le second élément poussoir est introduit seul dans la cheminée et le récipient lorsque le premier et le second élément du poussoir son introduits ensemble dans la cheminée.

Seuls les éléments nécessaires à la compréhension de l'invention ont été représentés. Pour faciliter la lecture des dessins les mêmes éléments portent les mêmes références d'une figure à l'autre.

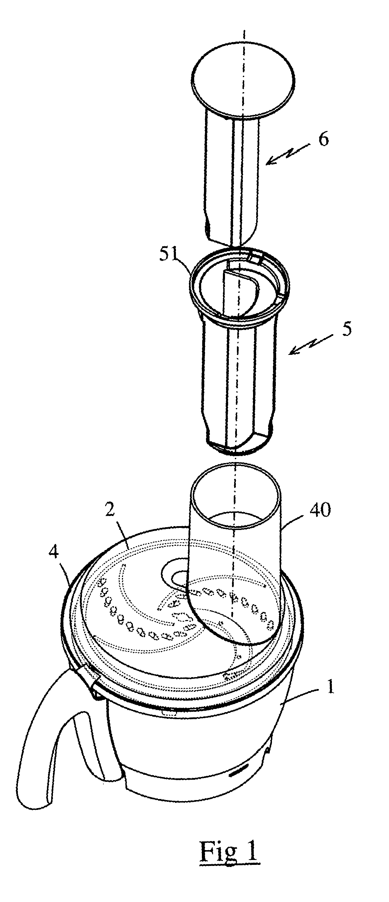

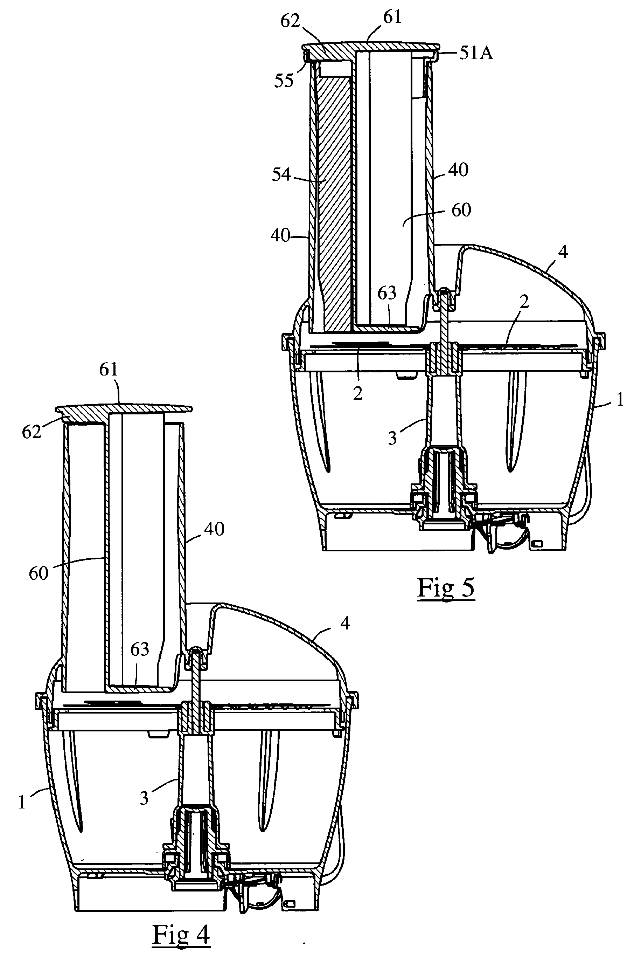

La figure 1 illustre un récipient de travail 1 d'un robot ménager de préparation culinaire renfermant un disque coupant 2, représenté en pointillé sur cette figure, le disque coupant 2 étant supporté par un moyeu rotatif 3, visible uniquement sur les figures 4 et 5, s'étendant depuis le fond du récipient 1. Le moyeu rotatif 3 est entraîné classiquement, et de manière connue en soi, par un mécanisme de transmission relié à un moteur, non représentés sur les figures.

Le récipient 1 est fermé par un couvercle 4 comportant une cheminée d'alimentation 40 circulaire présentant un diamètre intérieur de l'ordre de 70 mm permettant d'introduire des aliments de grande dimension en direction de l'outil coupant 2, la cheminée d'alimentation 40 s'élevant préférentiellement sur une hauteur de l'ordre de 180 mm afin de respecter les normes de sécurité en vigueur.

Le couvercle 4 comporte un poussoir en deux parties constitué par un premier élément poussoir 5 destiné à être engagé directement dans la cheminée d'alimentation 40 du couvercle et par un second élément poussoir 6 destiné à être engagé dans le premier élément poussoir.

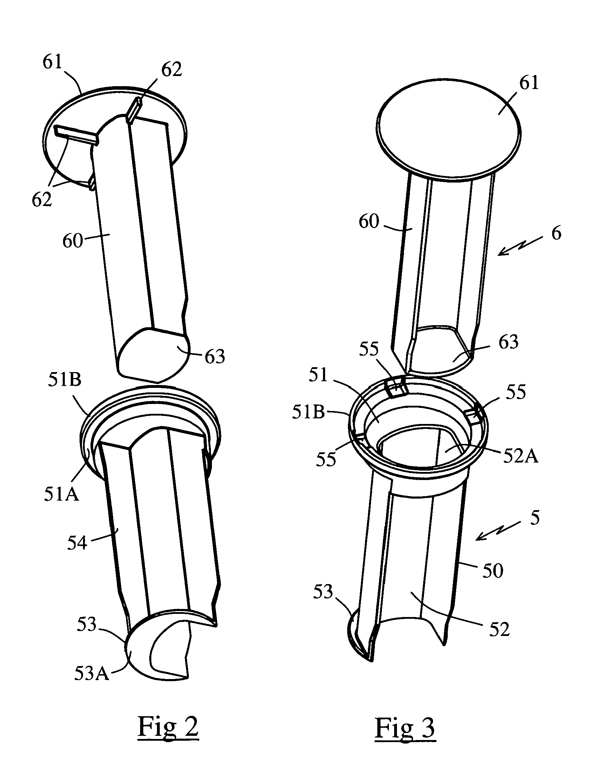

Conformément aux figures 2 et 3, le premier élément poussoir 5 comporte un corps allongé, formé essentiellement par une paroi 50 présentant une section transversale en U et s'étendant sur une longueur de l'ordre de 180 mm, l'extrémité supérieure de la paroi 50 étant reliée à une collerette 51 présentant un diamètre extérieur de l'ordre de 87 mm comportant un épaulement 51A adapté pour venir reposer sur le bord de l'extrémité supérieure de la cheminée d'alimentation 40 du couvercle 4.

De manière avantageuse, la collerette 51 présente une épaisseur supérieure à 2 mm lui assurant une bonne rigidité et comprend une bordure périphérique 51 B s'étendant axialement sur une hauteur de l'ordre de 7 mm.

Comme on peut mieux le voir sur la figure 3, la paroi 50 en U forme une goulotte 52, d'une largeur de l'ordre de 50 mm, qui est excentrée par rapport au centre de la collerette 51 et dans laquelle peut venir coulisser le second élément poussoir 6. La collerette 51 comporte une ouverture 52A dans le prolongement de la section transversale en U de la paroi 50 permettant l'introduction du second élément poussoir 6 et l'extrémité inférieure de la goulotte 52 est ouverte de manière à ce que cette dernière débouche directement dans le récipient 1 lorsque le premier élément poussoir 5 est mis en place dans la cheminée d'alimentation 40 du couvercle.

L'extrémité inférieure du premier élément poussoir 5 est munie d'une paroi de fond 53 s'étendant perpendiculairement à l'axe longitudinal du poussoir, cette paroi de fond 53 étant présente seulement à l'extérieur de la goulotte 52 et possédant une forme complémentaire à la section de passage de la cheminée d'alimentation 40 du couvercle.

La paroi de fond 53 définie une surface 53A utilisée pour pousser les aliments au travers de la cheminée d'alimentation 40 du couvercle, la rigidité de la paroi de fond 53 et du corps allongé du premier élément étant renforcée par une nervure 54 s'étendant radialement entre la paroi de fond 53 et la collerette 51, à l'extérieur de la goulotte 52.

Le second élément poussoir 6 comporte quant à lui un corps allongé essentiellement constitué par une paroi 60 présentant une section transversale en U dont la forme vient épouser la forme intérieure de la goulotte 52 du premier élément poussoir 5. La paroi 60 s'étend sur une longueur de l'ordre de 180 mm et présente une extrémité supérieure reliée à une tête 61, présentant la forme d'un disque de diamètre de l'ordre de 90 mm, formant une surface d'appui pour la main particulièrement confortable lorsque l'utilisateur souhaite utiliser le second élément poussoir 6 pour pousser les aliments.

L'extrémité inférieure de la paroi 60 du second élément poussoir 6 est fermée par une paroi de fond 63 venant compléter la paroi de fond 53 du premier élément poussoir, lorsque le corps allongé du second élément poussoir 6 est entièrement introduit dans la goulotte 52 du premier élément poussoir 5, permettant de former une surface pour pousser les aliments présentant une forme complémentaire de la section de passage de la cheminée d'alimentation 40 du couvercle.

Selon un mode particulier de réalisation de l'invention, la surface inférieure de la tête 61 disposée à l'extrémité supérieure du second élément poussoir comporte trois nervures 62 disposées à 90° les unes des autres et s'étendant radialement depuis la paroi 60 en U jusqu'à proximité de la périphérie de la tête 61 de telle sorte que les trois nervures 62 forment des butées qui viennent reposer sur le bord supérieur de la cheminée d'alimentation 40 lorsque le second élément poussoir 6 est introduit seul dans cette dernière, ainsi que cela est illustré sur la figure 4.

Ces trois nervures 62 présentent une hauteur adaptée pour que l'extrémité inférieure du second élément poussoir 6 vienne à proximité du disque coupant 2, sans toutefois toucher ce dernier, lorsque les trois nervures 62 du second élément poussoir 6 sont en butée contre le bord supérieur de la cheminée d'alimentation 40. A titre d'exemple la hauteur des nervures 62 est de l'ordre de 7 mm et est adaptée pour que l'espace résultant entre l'extrémité inférieure du second élément poussoir et l'outil coupant soit supérieur à 2 mm.

Conformément à la figure 3, la collerette 51 du premier élément poussoir 5 comporte trois encoches de réception 55, s'étendant à la fois sur la bordure périphérique 51 B et sur le fond de la collerette 51, dans lesquelles viennent s'engager les nervures 62 du second élément poussoir 6 lorsque le corps allongé de ce dernier est entièrement introduit dans la goulotte 52 du premier poussoir 5.

La collerette 51 présente une très faible épaisseur de matière, préférentiellement inférieure à 1 mm, au fond de ces encoches de réception 55, de sorte que le bord inférieur des nervures 62 du second élément poussoir est très faiblement surélevé par rapport au bord supérieur de la cheminée d'alimentation 40 lorsque les nervures 62 viennent en butée contre le fond des encoches de réception 55, ainsi que cela est illustré sur la figure 5.

On obtient ainsi un poussoir en deux parties dont la profondeur maximale d'introduction dans la cheminée d'alimentation est limitée à une valeur sensiblement équivalente lorsque les premier et second éléments du poussoir sont utilisés seule ou ensemble dans la cheminée d'alimentation.

L'appareil muni d'une telle cheminée d'alimentation de gros diamètre et d'un tel ensemble de poussoir présente l'avantage de permettre un traitement rapide des aliments de fort diamètre, tels que des pommes de terre, qui peuvent être introduits directement dans la cheminée d'aliment tout en conservant une bonne efficacité de traitement des aliments de plus faible diamètre, tels que des carottes, en plaçant le premier élément poussoir dans la cheminée d'alimentation puis en introduisant les aliments par la goulotte du premier élément poussoir, en venant pousser sur les aliments au moyen du second élément poussoir.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, les encoches de réception du premier élément poussoir pourront être formées par des ouvertures réalisées dans l'épaisseur de la collerette de sorte que le bord inférieur des nervures du second élément poussoir vienne buter directement sur le bord supérieur de la cheminée d'alimentation du couvercle en présence du premier élément poussoir.

Ainsi, dans une autre variante de réalisation de l'invention, les nervures formant des protubérances limitant la profondeur d'introduction du second élément poussoir dans la cheminée d'alimentation, lorsque ce dernier y est introduit seul, pourront être portées par la cheminée d'alimentation, par exemple à l'extrémité supérieure de cette dernière.

## Revendications

1. Appareil électroménager de préparation culinaire comportant un outil de travail (2) disposé dans un récipient (1) fermé par un couvercle (4) comprenant une cheminée d'alimentation (40) munie d'un poussoir amovible, ledit poussoir comportant un premier élément poussoir (5) comprenant un corps allongé surmonté d'une collerette (51) formant une butée limitant la profondeur d'introduction du corps allongé dans la cheminée d'alimentation (40), ledit premier élément poussoir (5) comprenant une extrémité supérieure ouverte comportant une ouverture (52A) d'accès à une goulotte (52) dans laquelle vient s'engager un second élément poussoir (6) comportant un corps allongé surmonté d'une tête (61) formant une butée limitant la profondeur d'introduction du corps allongé dans la goulotte (52), les corps allongés des premier et second éléments du poussoir (5, 6) présentant une longueur adaptée pour que leur extrémité inférieure vienne à proximité de l'outil de travail (2) lorsqu'ils sont, ensemble, engagés au maximum dans la cheminée d'alimentation (40), **caractérisé en ce que** la cheminée d'alimentation (40) ou la surface inférieure de la tête (61) du second élément poussoir (6) comporte des protubérances (62) formant des butées limitant la profondeur maximale d'introduction du second élément poussoir (6) lorsque ce dernier est introduit seul dans la cheminée d'alimentation (40) et **en ce que** lesdites protubérances (62) s'engagent dans des encoches de réception (55) portées par le premier élément poussoir (5) lorsque les deux éléments du poussoir (5, 6) sont introduits ensemble dans la cheminée d'alimentation (40).

2. Appareil électroménager selon la revendication 1, **caractérisé en ce que** lesdites encoches de réception (55) comportent un fond présentant une épaisseur de matière inférieure à 1 mm.

3. Appareil électroménager selon l'une quelconque des revendications 1 à 2, **caractérisé en ce que** lesdites protubérances (62) sont formées par au moins deux nervures s'étendant sous la tête (61) du second élément poussoir (6).

4. Appareil électroménager selon l'une quelconque des revendications 1 à 3, **caractérisé en ce que** lesdites protubérances (62) s'étendent radialement à la tête (61).

5. Appareil électroménager selon l'une quelconque des revendications 1 à 4, **caractérisé en ce que** lesdites encoches de réception sont formées sur la surface supérieure de la collerette (51) et **en ce que** ladite collerette (51) comporte une bordure périphérique (51 B) qui délimite un espace à l'intérieur duquel lesdites protubérances (62) viennent s'engager lorsque le second élément du poussoir (6) est entièrement introduit dans le premier élément poussoir (5).

6. Appareil électroménager selon l'une quelconque des revendications 1 à 5, **caractérisé en ce que** la collerette (51) du premier élément poussoir (5) présente un contour circulaire, ladite ouverture (52A) d'accès à la goulotte (52) étant excentrée par rapport au centre de la collerette (51).

7. Appareil électroménager selon la revendication 6, **caractérisé en ce que** le corps allongé du premier élément poussoir comporte une partie (50) présentant une section transversale en U venant dans le prolongement de ladite ouverture (52A) et formant la goulotte (52) de réception dudit second élément poussoir (6).

8. Appareil électroménager selon la revendication 7, **caractérisé en ce que** l'extrémité inférieure du premier élément poussoir (5) comporte une paroi de fond (53) s'étendant à l'extérieur de la goulotte (52) et présentant une forme complémentaire de la section de passage de la cheminée d'alimentation (40) du couvercle (4).

9. Appareil électroménager selon la revendication 8, **caractérisé en ce que** le premier élément poussoir (5) comporte une nervure de renfort (54) s'étendant à l'extérieur de la goulotte (52), entre la paroi de fond (53) et la collerette (51).

10. Appareil électroménager selon l'une quelconque des revendications 7 à 9, **caractérisé en ce que** le corps allongé dudit second élément (6) comporte une paroi (60) présentant une section transversale en U épousant la section de passage de la goulotte (52) du premier élément poussoir (5) et une extrémité inférieure fermée par une paroi de fond (63) présentant une forme complémentaire à la section de passage de la goulotte (52).
